# EUROPÄISCHE PATENTSCHRIFT

(11) **EP 1 657 469 B1**
(45) Veröffentlichungstag und Bekanntmachung des Hinweises auf die Patenterteilung: **21.12.2011**
(21) Anmeldenummer: 05023920.1
(22) Anmeldetag: 03.11.2005
(51) Int. Cl.: F16F 9/512, F16F 9/34, F16F 9/46

(54) **Schwingungsdämpfer mit verstellbarer Dämpfkraft**
Vibration damper with adjustable damping force
Amortisseur de vibrations avec force d'amortissement variable

(30) Priorität: 11.11.2004 DE 102004054474
(43) Veröffentlichungstag der Anmeldung: 17.05.2006
(73) Patentinhaber: ZF Friedrichshafen AG, 88046 Friedrichshafen (DE)
(72) Erfinder: Förster, Andreas, 97422 Schweinfurt (DE)

(56) Entgegenhaltungen:
- EP-A- 0 197 316
- EP-A- 0 654 618
- WO-A-00/52354
- DE-A1- 19 711 293
- DE-U1- 9 305 783
- US-A- 5 097 929
- US-A1- 2002 074 197

## Beschreibung

Die Erfindung betrifft einen Schwingungsdämpfer mit verstellbarer Dämpfkraft gemäß dem Oberbegriff von Patentanspruch 12.

Mit verstellbaren Schwingungsdämpfern, wie z. B. aus der DE 197 22 216 C1 bekannt, will man den Zielkonflikt zwischen einer einerseits auf Fahrsicherheit ausgerichteten tendenziell etwas härteren und einer komfortableren weichen Dämpfkrafteinstellung auflösen. Dabei werden die Fahrzeugbewegung repräsentierende Größen wie Fahrgeschwindigkeit, Quer- und/oder Vertikalbeschleunigungen von einer Sensorik erfasst, die von einem Steuergerät in Stellsignale umgesetzt und an die verstellbaren Schwingungsdämpfer geleitet werden.

Das Gesamtsystem soll möglichst schnell auf Fahrbahnhindernisse oder sonstige Einflüsse reagieren. Zum einen kann man z. B. Fahrbahnerkennungsgeräte wie z. B. eine Kamera einsetzen. Auf den ersten Blick erreicht man zwar eine vergrößerte Vorlaufzeit, z. B. zwischen einem Schlagloch und dem Ausfedern des entsprechenden Rades, doch ist eine Bildauswertung eine sehr rechenzeitintensive Prozedur, die nur bedingt zuverlässig ist. Eine andere Möglichkeit kann darin bestehen, dass man extrem leistungsfähige Sensoren und Aktuatoren für die verstellbaren Schwingungsdämpfer verwendet. Damit werden jedoch Kostengrenzen überschritten, die der Vermarktung des Produkts entgegenstehen.

Derzeit wird bewusst auf eine Dämpfkrafteinstellung für den maximalen Komfort verzichtet, da dann bei extremen Störungen im Fahrbetrieb das Gesamtsystem des verstellbaren Schwingungsdämpfers zu träge wäre, um eine ausreichende Fahrsicherheit zu bieten. Zusätzlich können auch Zug- oder Druckanschläge verwendet werden, die aber stets wegabhängig wirksam sind und deshalb z. B. bei langsamen Federungsbewegungen während einer Geradeausfahrt einen Komfortverlust darstellen.

Die WO00/52354 A beschreibt einen Zylinder mit einer axial beweglichen Kolbenstange, wobei in einer Strömungsverbindung zwischen den beiden Arbeitsräumen des Zylinders ein elektronisch gesteuert verstellbares Dämpfventil und ein in Abhängigkeit der Strömungsgeschwindigkeit des Dämpfmediums in Schließrichtung bewegbares Dämpfventil in Reihe angeordnet sind.

Aufgabe der vorliegenden Erfindung ist es, einen verstellbaren Schwingungsdämpfer zu realisieren, der eine komfortablere Dämpfkrafteinstellung zulässt.

Erfindungsgemäß beschreibt der Patentanspruch 1 eine erste Lösungsvariante.

Der große Vorteil besteht darin, dass eine nur mit großem Aufwand behebbare Totzeit des verstellbaren Dämpfventils durch ein einfaches zusätzliches Dämpfventil in dem Sinne kompensiert wird, dass Kolbenstangenspitzengeschwindigkeiten, wie sie z. B. beim Überfahren eines Hindernisses auftreten können, von dem zusätzlichen Dämpfventil abgebremst werden. Insbesondere dann, wenn die Kolbenstange mit sehr hoher Geschwindigkeit ihre maximale Einfahrstellung erreicht, könnten Karosserieschäden auftreten, die wiederum nur durch eine Verstärkung der Karosserie zu vermeiden wären. Mit dem dämpfkrafterhöhend wirksamen Dämpfventil kann einerseits die Systemgeschwindigkeit, d. h. von der Signalaufnahme durch die Sensorik bis zur Ausführung der Stellbewegung der Aktuatoren, verlangsamt werden, was mit Kostenvorteilen verbunden ist oder die minimale Dämpfkraft des Schwingungsdämpfers noch weiter abgesenkt werden, um einen Komfortvorteil zu erreichen. Sollte das besagte Hindernis auf der Straße auftreten, dann sorgt das zusätzliche Dämpfventil für die nötige Sicherheit.

Je nach Auslegung und Konstruktion des dämpfkrafterhöhend wirksamen Dämpfventils könnte der Schwingungsdämpfer bei einer extrem schnellen Kolbenstangenbewegung Schaden insbesondere in dem jeweils komprimierten Arbeitsraum nehmen. Das Druckbegrenzungsventil öffnet ab einem Grenzdruck und überbrückt das dämpfkrafterhöhend wirksame Dämpfventil.

In weiterer vorteilhafter Ausgestaltung der Erfindung ist vorgesehen, dass das dämpfkrafterhöhend wirksame Dämpfventil dem verstellbaren Dämpfventil vorgelagert ist: Das dämpfkrafterhöhend wirksame Dämpfventil stellt praktisch einen zuschaltbaren Vorwiderstand dar, der das verstellbare Dämpfventil schützt.

Beispielsweise ist das Druckbegrenzungsventil in einer Strömungsverbindung zwischen einem der Arbeitsräume und einem Ausgleichsraum zur Kompensation des verdrängten Volumens der Kolbenstange angeordnet. Alternativ kann das Druckbegrenzungsventil in einer Strömungsverbindung zwischen den beiden Arbeitsräumen angeordnet sein.

Gemäß einem vorteilhaften Unteranspruch ist das dämpfkrafterhöhend wirksame Dämpfventil an beliebiger Stelle ausgehend von einer Eintritts- und einer Austrittsöffnung der Fluidenverbindung zum Dämpfventil angeordnet.

In weiterer vorteilhafter Ausgestaltung wird das dämpfkrafterhöhend wirksame Dämpfventil von einem staudruckbeaufschlagten Schließkörper gebildet.

Beispielsweise ist der Schließkörper als ein Schließring ausgeführt, der den Querschnitt der Eintrittsöffnung steuert.

Eine besonders einfache Variante eines dämpfkrafterhöhend wirksamen Dämpfventils wird dadurch erreicht, dass eine Außenseite des Schließrings und die Innenwandung des Zylinders eine Drosselstelle bilden, die ein Druckgefälle bezogen auf eine Innenseite des Schließrings erzeugt. Der Staudruck in einem Arbeitsraum sorgt dafür, dass sich der Schließring an der Innenwand des Zylinders elastisch anlegt und die Eintrittsöffnung in Richtung des verstellbaren Dämpfventils zumindest teilverschließt.

Alternativ oder zusätzlich kann der Kolben mindestens einen Verbindungskanal zwischen den beiden Arbeitsräumen aufweisen, der von dem Schließkörper zumindest teilverschließbar ist.

Bei einer einfacheren Variante eines verstellbaren Schwingungsdämpfers liegt für beide Kolbenstangenbewegungsrichtungen ein gemeinsames verstellbares Dämpfventil vor und über den Verbindungskanal im Kolben wird Dämpfmedium zum verstellbaren Dämpfventil verdrängt.

Alternativ lässt sich die Erfindung auch verwenden, wenn für jeweils eine Kolbenstangenbewegungsrichtung ein separat verstellbares Dämpfventil vorliegt.

Bei einer Alternativvariante ist dem verstellbaren Dämpfventil eine Drosselstelle parallel geschaltet ist, wobei dieser Drosselstelle in Reihe ein Dämpfventil zugeordnet, das in Abhängigkeit der Strömungsgeschwindigkeit des Dämpfmediums in Schließrichtung bewegt wird. Diese Variante ist insbesondere dann interessant, wenn z. B. bei einem Schwingungsdämpfer in der Ausführung eines Federbeins eine Kolbenstange mit einem vergleichsweise großen Kolbenstangendurchmesser eingesetzt wird. Man unterteilt das verdrängte Dämpfmittel in einen Teilvolumenstrom, der durch die Drosselstelle und ein Teilvolumenstrom, der durch das verstellbare Dämpfventil fließt.
Im Hinblick auf eine lineare oder degressive Dämpfkraftkennlinie ist die Drosselstelle als ein Dämpfventil ausgeführt, z. B. mit mindestens einer Ventilscheibe, die mit einem Ventilkörper zusammenwirkt.

Dabei kann die Drosselstelle als ein Bodenventil im kolbenstangenfernen Arbeitsraum ausgeführt sein.

Anhand der folgenden Figurenbeschreibung soll die Erfindung näher erläutert werden.

Es zeigt:
- Fig. 1: Blockschaltbild von einem erfindungsgemäßen Schwingungsdämpfer mit jeweils einem verstellbaren Dämpfventil pro Kolbenstangenbewe- gungsrichtung
- Fig. 2: Ausführungsbeispiel zur Fig. 1
- Fig. 3: Blockschaltbild von einem erfindungsgemäßen Schwingungsdämpfer mit einem verstellbaren Dämpfventil für beide Kolbenstangenbewe- gungsrichtungen
- Fig. 4 u. 5: Ausführungsbeispiel zur Fig. 3
- Fig. 6: Bodenventil mit einem Dämpfventil, das in Abhängigkeit der Strö- mungsgeschwindigkeit in Schließrichtung bewegbar ist.

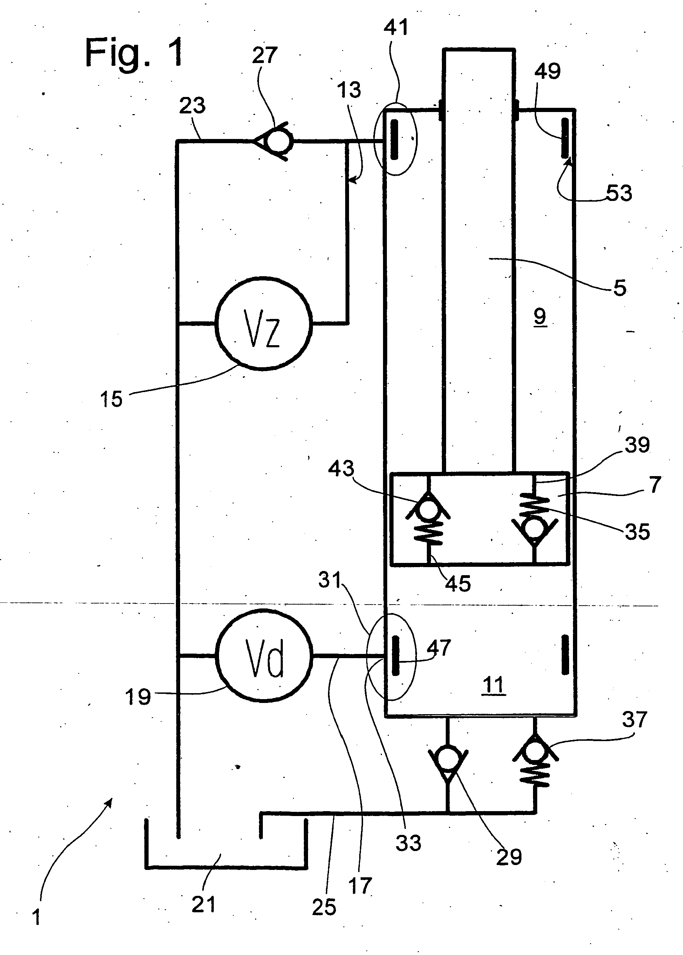

Die Fig. 1 zeigt ein Blockschaltbild von einem Schwingungsdämpfer 1, der einen dämpfmittelgefüllten Zylinder 3 umfasst, in dem eine Kolbenstange 5 zusammen mit einem Kolben 7 axial verschiebbar geführt ist. Der Kolben 7 unterteilt den Zylinder 3 in einen kolbenstangenseitigen Arbeitsraum 9 und einen kolbenstangenfernen Arbeitsraum 11. Im Prinzip kann es sich bei dem Kolben um einen einfachen Verdränger ohne Durchlasskanäle handeln. Der kolbenstangenseitige Arbeitsraum ist über eine Fluidenverbindung 13 mit einem verstellbaren Dämpfventil 15 verbunden. Auch der kolbenstangenferne Arbeitsraum 11 verfügt über eine Fluidenverbindung 17, die zu einem separat verstellbaren Dämpfventil 19 führt. Das aus den jeweiligen Arbeitsräumen in die verstellbaren Dämpfventile verdrängte Dämpfmedium fließt in einen Ausgleichsraum 21. Sowohl der kolbenstangenseitige wie auch der kolbenstangenferne Arbeitsraum stehen über eine Rückflussleitung 23; 25 in Kombination mit einem in Fließrichtung zum Arbeitsraum öffnenden Rückschlagventil 27; 29 mit dem Ausgleichsraum in Verbindung.

Zumindest dem Dämpfventil 19, das bei einer Einfahrbewegung der Kolbenstange wirksam ist, ist bezüglich der Strömungsrichtung in Reihe zu dem verstellbaren Dämpfventil ein Dämpfventil (31; 41) angeordnet ist, das in Abhängigkeit der Strömungsgeschwindigkeit des Dämpfmediums in Schließrichtung bewegt wird. Das Dämpfventil 31 ist dem verstellbaren Dämpfventil 19 an beliebiger Stelle zwischen einer Eintritts- 33 und einer Austrittsöffnung der Fluidenverbindung 17 zum verstellbaren Dämpfventil 19 vorgelagert. Dem dämpfkrafterhöhend wirksamen Dämpfventil 31 ist ein Druckbegrenzungsventil 35; 37 parallel geschaltet. Das Druckbegrenzungsventil 35 ist in einer Strömungsverbindung 39, z. B. im Kolben 7, zwischen den beiden Arbeitsräumen 9; 11 angeordnet. Alternativ kann das Druckbegrenzungsventil 37 auch zwischen dem kolbenstangenfernen Arbeitsraum und dem Ausgleichsraum 21 angeordnet sein.

Auch der kolbenstangenseitige Arbeitsraum 9 kann mit einem dämpfkrafterhöhend wirksamen Dämpfventil 41 bestückt sein, das in Reihe zum verstellbaren Dämpfventil 15 angeordnet ist. In diesem Fall ist ein Druckbegrenzungsventil 43 z. B. in einer Strömungsverbindung 45 im Kolben sinnvoll.

Das dämpfkrafterhöhend wirksame Dämpfventil 31; 41 wird von einem Schließkörper in Form eines Schließrings 47; 49 gebildet, der mit seiner Außenseite und der Innenwandung des Zylinders eine Drosselstelle 51; 53 bildet.

Beim normalen Schwingungsdämpferbetrieb fährt die Kolbenstange zusammen mit dem Kolben in den Zylinder 3 ein und komprimiert den kolbenstangenfernen Arbeitsraum 11. Das Druckbegrenzungsventil 35 im Kolben 7 oder das alternativ vorliegende Druckbegrenzungsventil 37 im Boden des Arbeitsraums 11 sind geschlossen, ebenso wie das Rückschlagventil 29. In Abhängigkeit der gewünschten Dämpfkraft kann das im Arbeitsraum 11 unter Druck stehende Dämpfmittel über die Eintrittsöffnung 33 der Fluidenverbindung 17 in das verstellbare Dämpfventil 19 und weiter in den Ausgleichsraum 21 entweichen und/oder über das geöffnete Rückschlagventil 27 in den ringförmigen kolbenstangenseitigen Arbeitsraum fließen, damit dort kein Unterdruck entsteht.

Bei einer extremen Einfahrgeschwindigkeit der Kolbenstange sorgt die Drosselstelle 51 für ein Druckgefälle zur Eintrittsöffnung 33 bezogen auf die Innenseite des Schließrings 47; 49. Der auf die Innenseite des Schließrings 47 wirksame Staudruck kann den Schließring auf die Eintrittsöffnung pressen und diese maximal völlig abdichten. Die Dämpfkraft des Schwingungsdämpfer wird nun von dem vorhandenen Restquerschnitt im Bereich der Eintrittsöffnung bestimmt. Das verstellbare Dämpfventil 19 hat keinen Einfluss auf die Dämpfkraft, so dass es völlig gleichgültig ist, welche Einstellung momentan vorliegt. Übersteigt der Druck im Arbeitsraum 11 ein bestimmtes Niveau, dann kann das Druckbegrenzungsventil 35 oder 37 einen zusätzlichen Dämpfmittelabfluss ermöglichen und den Schwingungsdämpfer vor einem Schaden schützen.

Für die Ausfahrbewegung der Kolbenstange 5 gilt prinzipiell dasselbe. Unterhalb einer definierten Kolbenstangengeschwindigkeit ist das dämpfkrafterhöhend wirksame Dämpfventil 41 vollständig geöffnet. Wird diese Kolbenstangengeschwindigkeit überschritten, dann verschließt der Schließkörper 49 die Fluidenverbindung 13 zum verstellbaren Dämpfventil 15, wobei dann ggf. noch das Druckbegrenzungsventil 45 in der Strömungsverbindung 43 öffnen kann.

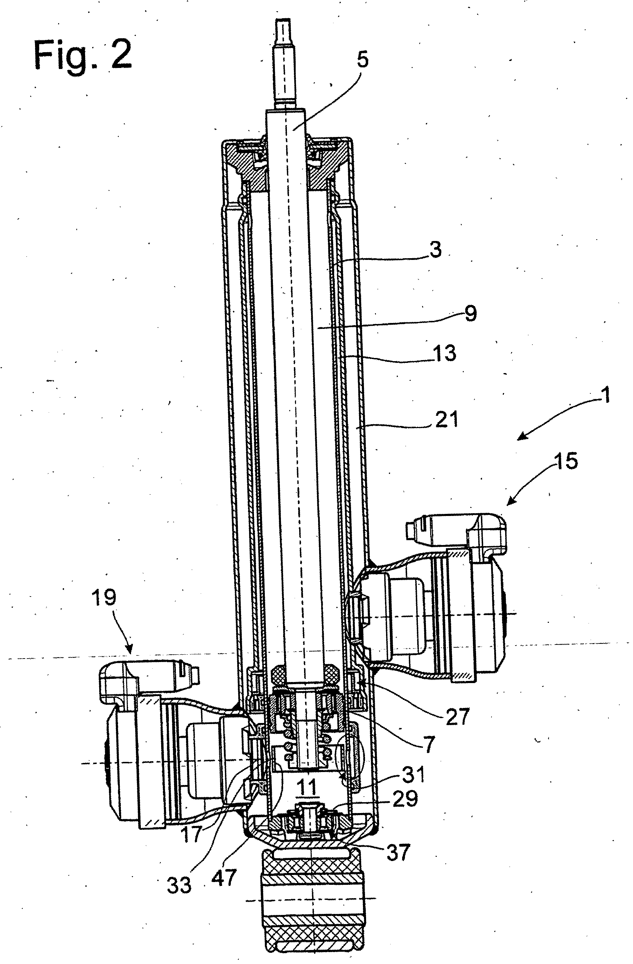

In der Fig. 2 ist eine technische Umsetzung des Schwingungsdämpfers gemäß Fig. 1 dargestellt. In Abwandlung wurde auf die Verwendung eines dämpfkrafterhöhend wirksames Dämpfventil 41 verzichtet, da die erreichbare Kolbenstangengeschwindigkeit von der Kraft der Fahrzeugfeder bestimmt wird und deshalb in der Regel deutlich unter einer in Einfahrrichtung durch ein Hindernis erzeugbaren Kolbenstangengeschwindigkeit liegt.

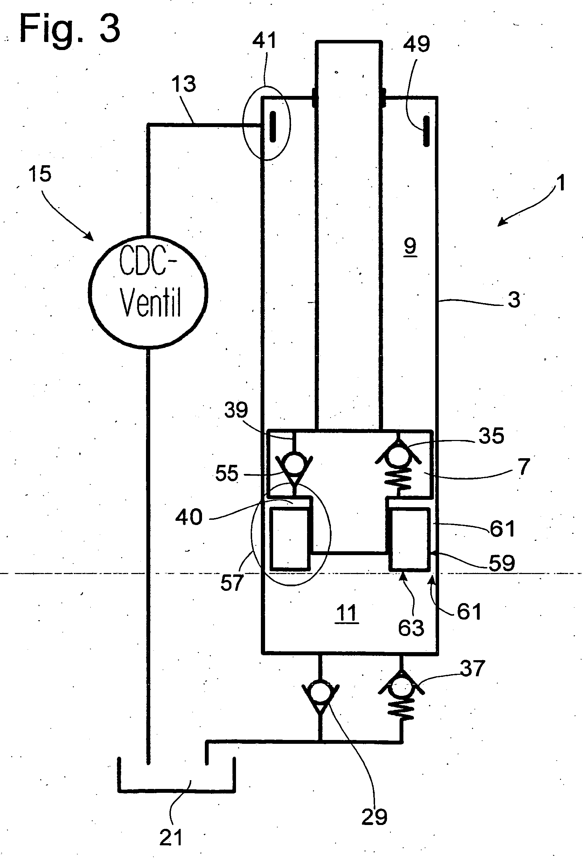

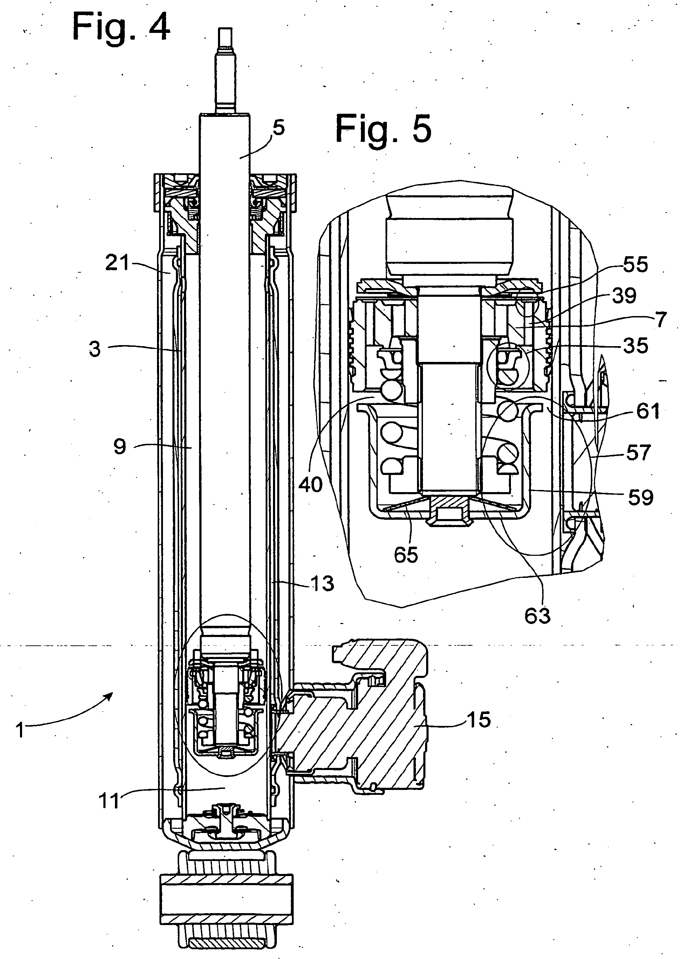

Die Fig. 3 und Fig. 4 zeigen eine Variante eines verstellbaren Schwingungsdämpfers 1, der für beide Kolbenstangenbewegungsrichtungen ein gemeinsames verstellbares Dämpfventil 15 aufweist. Der kolbenstangenseitige Arbeitsraum 9 ist über die Fluidenverbindung 13 mit dem verstellbaren Dämpfventil 15 verbunden. Im Kolben 7 ist die Strömungsverbindung 39 zusammen mit einem Rückschlagventil 55 ausgeführt, die die beiden Arbeitsräume 9; 11 bei einer Einfahrbewegung der Kolbenstange verbindet und bei einer Ausfahrbewegung der Kolbenstange trennt. Bei einer Einfahrbewegung wird das im Arbeitsraum 11 vorhandene Dämpfmedium komprimiert, wobei das Rückschlagventil 29 zum Ausgleichsraum geschlossen ist. Auch ein Druckbegrenzungsventil 37 zwischen dem kolbenstangenfernen Arbeitsraum 11 und dem Ausgleichsraum ist geschlossen. Das gesamte verdrängte Volumen aus dem kolbenstangenfernen Arbeitsraum wird durch einen Verbindungskanal 40 bzw. die offene Strömungsverbindung 39 in den kolbenstangenseitigen Arbeitsraum 9 verdrängt, wobei das Volumen der einfahrenden Kolbenstange dem verstellbaren Dämpfventil 15 zugeführt wird. Bei einer Ausfahrbewegung der Kolbenstange ist das Rückschlagventil 55 geschlossen, so dass das gesamte Ringvolumen aus dem kolbenstangenseitigen Arbeitsraum in das Dämpfventil fließt. Das Rückschlagventil 29 verhindert eine Unterdruckbildung im kolbenstangenfernen Arbeitsraum 11. Damit ergibt sich eine Gleichrichtung der Strömung innerhalb der Fluidenverbindung 13, so dass mit einem einzigen Dämpfventil 15 eine Dämpfkraftverstellung für beide Kolbenstangenbewegungsrichtungen erreicht wird.

Wird eine definierte Einfahrgeschwindigkeit der Kolbenstange überschritten; dann wirkt ein Dämpfventil 57 dämpfkraftterhöhend. Das Dämpfventil 57 verfügt über einen Schließkörper in der Bauform eines Steuerschiebers 59, der mit der Innenwandung des Zylinders 3 oder mit Kolben eine Drosselstelle 61 bildet. Der Steuerschieber weist eine in Richtung des kolbenstangenfernen Arbeitsraums 11 ausgerichtete druckbeaufschlagte Staudruckfläche 63 auf, die bei entsprechender Druckbeaufschlagung zu einer axialen Verschiebebewegung des Steuerschiebers in Richtung des Kolbens führt, wodurch die Strömungsverbindung 39 zumindest teilverschlossen wird. Bei einer Einfahrbewegung der Kolbenstange bestimmt dann das Dämpfventil 57, das dem verstellbaren Dämpfventil 15 vorgelagert ist, die Dämpfkraft. Ggf. kann dann auch das Druckbegrenzungsventil 37 öffnen und einen Abfluss in den Ausgleichsraum 21 zulassen.

Soll auch die Ausfahrrichtung mit einem druckabhängig dämpfkrafterhöhend wirksamen Dämpfventil 41 versehen sein, wie bereits zur Fig. 1 beschrieben ist, dann kann beispielsweise im Kolben ein Druckbegrenzungsventil 35 sinnvoll sein.

Mit der Fig. 4, die einen Schwingungsdämpfer gemäß dem Blockschaltbild. nach Fig. 3 im Längsschnitt zeigt und der Detaildarstellung des Kolbens in der Fig. 5 soll verdeutlicht werden, wie konstruktiv einfach, aber dennoch ungemein effektiv das dämpfkrafterhöhend wirksame Dämpfventil 57 aufgebaut ist. Eine Rückstellfeder 65 sorgt dafür, dass der Steuerschieber 59 des dämpfkrafterhöhenden Dämpfventils 57 wieder in eine offene Stellung zurückbewegt wird und deshalb keine hublagenabhängige Dämpfkraftverstellung vorliegt. Auch in der Fig. 4 wurde aus Gründen der Übersicht auf eine zeichnerische Darstellung eines Dämpfventils 41 verzichtet.

Das Rückschlagventil 55 in der Fig. 5 kann auch als Drosselstelle ausgelegt sein, die mit einer Ventilscheibe ein konventionelles Dämpfventil bildet. Zu diesem Dämpfventill ist das geschwindigkeitsabhängig in Schließrichtung dämpfkraft erhöhend wirksame Dämpfventil 57 im Kolben 7 funktional in Reihe geschaltet sein. Beide Ventile 55; 57 sind wiederum dem verstellbaren Dämpfventil funktional parallel geschaltet.

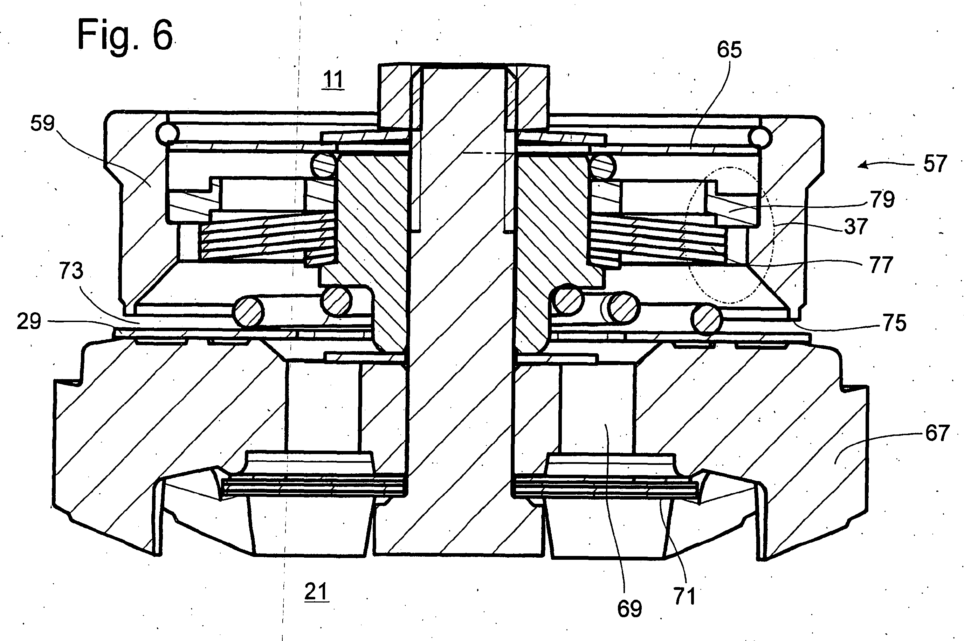

Die Fig. 6 zeigt ein Bodenventil 57 nach dem Funktionsprinzip des Dämpfventils 57 gemäß der Fig. 5, das z. B. in den Fig. 2 oder 4 zur Anwendung kommen kann, um ebenfalls wie zur Fig. 5 beschrieben, zwei Teilströme bei einfahrender Kolbenstange 5 zu erreichen.

Ein Bodenventilkörper 67 verfügt über eine Anzahl von Drosselstellen 69, die zusammen mit mindestens einer Ventilscheibe 71 ein Dämpfventil bilden. Dieses Dämpfventil öffnet ausgehend vom kolbenstangenfernen Arbeitsraum 11 zum Ausgleichsraum 21. Oberhalb des Bodenventils wird ein Steuerschieber 59 von einer Rückstellfeder 65 in einer Duchlass-Stellung zu einer Drosselstelle 73 gehalten. Sobald aufgrund der Strömungsgeschwindigkeit an der Drosselstelle 73 ein ausreichendes Druckgefälle vorliegt, kann der Steuerschieber mit seiner Stirnfläche 75 auf der Oberseite des Rückschlagventils 29 zur Auflage kommen und den weiteren Teilvolumenstrom in Richtung des Ausgleichsraums 21 blockieren. Ab diesem Zustand fließt das gesamte von der Kolbenstange 5 verdrängte Volumen in das verstellbare Dämpfventil 15. Sollte der Druck im kolbenstangenfernen Arbeitsraum einen Grenzwert überschreiten, dann kann das aus mindestens einer elastischen Ventilscheibe 77 bestehende Druckbegrenzungsventil 37 von einem Ventilsitzring 79 abheben und damit öffnen, das der Drosselstelle73 wiederum parallel geschaltet ist.

## Patentansprüche

1. Schwingungsdämpfer (1) mit verstellbarer Dämpfkraft, umfassend eine Kolbenstange (5), die in einem dämpfmittelgefüllten Zylinder (3) zusammen mit einem Kolben (7) axial beweglich angeordnet, wobei der Kolben (7) den Zylinder (3) in einen kolbenstangenseitigen und einen kolbenstangenfernen Arbeitsraum (9; 11) unterteilt, mit einem verstellbaren Dämpfventil (15; 19), das über eine Fluidenverbindung (13; 17) mit mindestens einem der beiden Arbeitsräume (9; 11) angeschlossen ist, wobei bezogen auf die Strömung des Dämpfmittels in Reihe zu dem verstellbaren Dämpfventil (15; 19) ein Dämpfventil (31; 41) angeordnet ist, das in Abhängigkeit der Strömungsgeschwindigkeit des Dämpfmediums in Schließrichtung bewegt wird,
**dadurch gekennzeichnet,**
**dass** dem Dämpfventil (31; 41) ein Druckbegrenzungsventil (35; 37; 43) parallel geschaltet ist.

2. Schwingungsdämpfer nach Anspruch 1,
**dadurch gekennzeichnet,**
**dass** das Dämpfventil (31; 41) dem verstellbaren Dämpfventil (15; 19) vorgelagert ist.

3. Schwingungsdämpfer nach Anspruch 2,
**dadurch gekennzeichnet,**
**dass** das Druckbegrenzungsventil (37) in einer Strömungsverbindung (25) wischen einem der Arbeitsräume (11) und einem Ausgleichsraum (21) zur Kompensation des verdrängten Volumens der Kolbenstange (5) angeordnet ist.

4. Schwingungsdämpfer nach Anspruch 1,
**dadurch gekennzeichnet,**
**dass** das Druckbegrenzungsventil (35; 43) in einer Strömungsverbindung zwischen den beiden Arbeitsräumen (9; 11) angeordnet ist.

5. Schwingungsdämpfer nach Anspruch 2,
**dadurch gekennzeichnet,**
**dass** das dämpfkrafterhöhend wirksame Dämpfventil (31; 41) an beliebiger Stelle ausgehend von einer Eintritts- (33) und bis zu einer Austrittsöffnung der Fluidenverbindung (13; 17) zum Dämpfventil (15; 19) angeordnet ist.

6. Schwingungsdämpfer nach Anspruch 1,
**dadurch gekennzeichnet,**
**dass** das dämpfkrafterhöhend wirksame Dämpfventil (31; 41) von einem staudruckbeaufschlagten Schließkörper (47; 49) gebildet wird.

7. Schwingungsdämpfer nach Anspruch 6,
**dadurch gekennzeichnet,**
**dass** der Schließkörper als ein Schließring (47; 49) ausgeführt ist, der den Querschnitt der Eintrittsöffnung (33) steuert.

8. Schwingungsdämpfer nach Anspruch 7,
**dadurch gekennzeichnet,**
**dass** eine Außenseite des Schließrings (47; 49) und die Innenwandung des Zylinders (3) eine Drosselstelle (51; 53) bilden, die ein Druckgefälle bezogen auf eine Innenseite des Schließrings (47; 49) erzeugt,

9. Schwingungsdämpfer nach Anspruch 1,
**dadurch gekennzeichnet,**
**dass** der Kolben (7) mindestens einen Verbindungskanal (40) zwischen den beiden Arbeitsräumen (9; 11) aufweist, wobei dieser Verbindungskanal (40) von dem Schließkörper (59) zumindest teilverschließbar ist.

10. Schwingungsdämpfer nach Anspruch 1,
**dadurch gekennzeichnet,**
**dass** für beide Kolbenstangenbewegungsrichtungen ein gemeinsames verstellbares Dämpfventil (15) vorliegt und über den Verbindungskanal (39) im Kolben Dämpfmedium zum verstellbaren Dämpfventil (15) verdrängt wird.

11. Schwingungsdämpfer nach Anspruch 1,
**dadurch gekennzeichnet,**
**dass** für jeweils eine Kolbenstangenbewegungsrichtung ein separat verstellbares Dämpfventil (15, 19) vorliegt.

12. Schwingungsdämpfer (1) mit verstellbarer Dämpfkraft, umfassend eine Kolbenstange (5), die in einem dämpfmittelgefüllten Zylinder (3) zusammen mit einem Kolben (7) axial beweglich angeordnet, wobei der Kolben (7) den Zylinder (3) in einen kolbenstangenseitigen und einen kojbenstangenfernen Arbeitsraum (9; 11) unterteilt, mit einem verstellbaren Dämpfventil (15), das über eine Fluidenverbindung (13; 17) mit mindestens einem der beiden Arbeitsräume (9; 11) angeschlossen ist, und dem verstellbaren Dämpfventil (15) eine Drosselstelle (69) parallel geschaltet ist,
**dadurch gekennzeichnet,**
**dass** dieser Drosselstelle (69) in Reihe ein Dämpfventil (59; 73: 75) zugeordnet ist, das in Abhängigkeit der Strömungsgeschwindigkeit des Dämpfmediums in Schließrichtung bewegt wird.

13. Schwingungsdämpfer nach Anspruch 12,
**dadurch gekennzeichnet,**
**dass** die Drosselstelle (69) als ein Dämpfventil ausgeführt ist.

14. Schwingungsdämpfer nach Anspruch 12,
**dadurch gekennzeichnet,**
**dass** die Drosselstelle (69; 71) als ein Bodenventil im kolbenstangenfernen Arbeitsraum (11) ausgeführt ist.

## Claims

1. Vibration damper (1) with adjustable damping force, comprising a piston rod (5), which is arranged so as to be axially movable, together with a piston (7), in a cylinder (3) containing a damping medium, wherein the piston (7) divides the cylinder (3) into a working space (9) on the piston-rod side and a working space (11) on the opposite side from the piston rod, with an adjustable damping valve (15; 19) connected to at least one of the two working spaces (9; 11) by a fluid connection (13; 17), wherein a damping valve (31; 41) is arranged in series with the adjustable damping valve (15; 19) in respect of the flow of the damping medium, said damping valve (31; 41) being moved in a closing direction as a function of the flow velocity, **characterized in that** a pressure limiting valve (35; 37; 43) is connected in parallel with the damping valve (31; 41).

2. Vibration damper according to Claim 1, **characterized in that** the damping valve (31; 41) is positioned upstream of the adjustable damping valve (15; 19).

3. Vibration damper according to Claim 2, **characterized in that** the pressure-limiting valve (37) is arranged in a flow connection (25) between one of the working spaces (11) and a compensating space (21) for compensating for the volume displaced by the piston rod (5).

4. Vibration damper according to Claim 1, **characterized in that** the pressure-limiting valve (35; 43) is arranged in a flow connection between the two working spaces (9; 11).

5. Vibration damper according to Claim 2, **characterized in that** the damping valve (31; 41) which has the effect of increasing the damping force is arranged at any point from an inlet opening (33) to an outlet opening of the fluid connection (13; 17) to the damping valve (15; 19).

6. Vibration damper according to Claim 1, **characterized in that** the damping valve (31; 41) which has the effect of increasing the damping force is formed by a closing body (47; 49) acted upon by ram pressure.

7. Vibration damper according to Claim 6, **characterized in that** the closing body is embodied as a closing ring (47; 49) which controls the cross section of the inlet opening (33).

8. Vibration damper according to Claim 7, **characterized in that** an outer side of the closing ring (47; 49) and the inner wall of the cylinder (3) form a restriction (51; 53) which produces a pressure drop in relation to an inner side of the closing ring (47; 49).

9. Vibration damper according to Claim 1, **characterized in that** the piston (7) has at least one connecting channel (40) between the two working spaces (9; 11), wherein said connecting channel (40) can be at least partially closed by the closing body (59).

10. Vibration damper according to Claim 1, **characterized in that** there is a common adjustable damping valve (15) for both directions of piston rod movement, and damping medium is displaced to the adjustable damping valve (15) via the connecting channel (39) in the piston.

11. Vibration damper according to Claim 1, **characterized in that** there is a separately adjustable damping valve (15, 19) for each direction of piston rod movement.

12. Vibration damper (1) with an adjustable damping force, comprising a piston rod (5), which is arranged so as to be axially movable, together with a piston (7), in a cylinder (3) containing a damping medium, wherein the piston (7) divides the cylinder (3) into a working space (9) on the piston-rod side and a working space (11) on the opposite side from the piston rod, with an adjustable damping valve (15) connected to at least one of the two working spaces (9; 11) by a fluid connection (13; 17), and a restriction (69) is connected in parallel with the adjustable damping valve (15), **characterized in that** said restriction (69) is assigned a damping valve (59; 73: 75) connected in series, which is moved in a closing direction as a function of the flow velocity of the damping medium.

13. Vibration damper according to Claim 12, **characterized in that** the restriction (69) is embodied as a damping valve.

14. Vibration damper according to Claim 12, **characterized in that** the restriction (69; 71) is embodied as a bottom valve in the working space (11) on the side opposite the piston rod.

## Revendications

1. Amortisseur de vibrations (1) à force d'amortissement variable, comprenant une tige de piston (5), qui est disposée de manière mobile axialement conjointement avec un piston (7) dans un cylindre (3) rempli de fluide amortisseur, le piston (7) divisant le cylindre (3) en un espace de travail (9 ; 11) du côté de la tige de piston et un espace de travail éloigné de la tige de piston, avec une soupape d'amortissement réglable (15 ; 19) qui est raccordée par le biais d'une connexion fluidique (13 ; 17) à au moins l'un des deux espaces de travail (9 ; 11), une soupape d'amortissement (31 ; 41) étant disposée en série avec la soupape d'amortissement réglable (15 ; 19) par rapport à l'écoulement du fluide amortisseur, laquelle soupape d'amortissement est déplacée dans la direction de fermeture en fonction de la vitesse d'écoulement du fluide amortisseur,
**caractérisé en ce**
**qu'**une soupape de limitation de la pression (35 ; 37 ; 43) est montée en parallèle avec la soupape d'amortissement (31 ; 41).

2. Amortisseur de vibrations selon la revendication 1,
**caractérisé en ce que**
la soupape d'amortissement (31 ; 41) est montée avant la soupape d'amortissement réglable (15 ; 19).

3. Amortisseur de vibrations selon la revendication 2,
**caractérisé en ce que**
la soupape de limitation de la pression (37) est disposée dans une connexion d'écoulement (25) entre l'un des espaces de travail (11) et un espace de compensation (21) pour compenser le volume déplacé de la tige de piston (5).

4. Amortisseur de vibrations selon la revendication 1,
**caractérisé en ce que**
la soupape de limitation de la pression (35 ; 43) est disposée dans une connexion d'écoulement entre les deux espaces de travail (9 ; 11).

5. Amortisseur de vibrations selon la revendication 2,
**caractérisé en ce que**
la soupape d'amortissement (31 ; 41) agissant en augmentant la force d'amortissement est disposée en un emplacement quelconque partant d'une ouverture d'entrée (33) et jusqu'à une ouverture de sortie de la connexion fluidique (13 ; 17) vers la soupape d'amortissement (15 ; 19).

6. Amortisseur de vibrations selon la revendication 1,
**caractérisé en ce que**
la soupape d'amortissement (31 ; 41) agissant en augmentant la force d'amortissement est formée par un corps de fermeture (47 ; 49) sollicité par la pression dynamique.

7. Amortisseur de vibrations selon la revendication 6,
**caractérisé en ce que**
le corps de fermeture est réalisé sous forme de bague de fermeture (47 ; 49) qui commande la section transversale de l'ouverture d'entrée (33).

8. Amortisseur de vibrations selon la revendication 7,
**caractérisé en ce**
**qu'**un côté extérieur de la bague de fermeture (47 ; 49) et la paroi interne du cylindre (3) forment un étranglement (51 ; 53), qui produit un gradient de pression par rapport à un côté intérieur de la bague de fermeture (47 ; 49).

9. Amortisseur de vibrations selon la revendication 1,
**caractérisé en ce que**
le piston (7) présente au moins un canal de connexion (40) entre les deux espaces de travail (9 ; 11), ce canal de connexion (40) pouvant être au moins partiellement fermé par le corps de fermeture (59).

10. Amortisseur de vibrations selon la revendication 1,
**caractérisé en ce que**
pour les deux sens de déplacement de la tige de piston, on dispose d'une soupape d'amortissement (15) réglable en commun et du fluide amortisseur est déplacé par le biais du canal de connexion (40) dans le piston vers la soupape d'amortissement réglable (15).

11. Amortisseur de vibrations selon la revendication 1,
**caractérisé en ce que**
l'on dispose d'une soupape d'amortissement réglable séparément (15, 19) pour chaque sens de déplacement de la tige de piston.

12. Amortisseur de vibrations (1) à force d'amortissement réglable, comprenant une tige de piston (5), qui est disposée de manière mobile axialement conjointement avec un piston (7) dans un cylindre (3) rempli de fluide amortisseur, le piston (7) divisant le cylindre (3) en un espace de travail (9 ; 11) du côté de la tige de piston et un espace de travail éloigné de la tige de piston, avec une soupape d'amortissement réglable (15) qui est raccordée par le biais d'une connexion fluidique (13 ; 17) à au moins l'un des deux espaces de travail (9 ; 11), et un étranglement (69) étant monté en parallèle avec la soupape d'amortissement réglable (15),
**caractérisé en ce que** cet étranglement (69) est associé en série à une soupape d'amortissement (59 ; 73 ; 75) qui est déplacée en fonction de la vitesse d'écoulement du fluide amortisseur dans la direction de fermeture.

13. Amortisseur de vibrations selon la revendication 12,
**caractérisé en ce que**
l'étranglement (69) est réalisé sous forme de soupape d'amortissement.

14. Amortisseur de vibrations selon la revendication 12,
**caractérisé en ce que**
l'étranglement (69 ; 71) est réalisé sous forme de soupape de fond dans l'espace de travail (11) éloigné de la tige de piston.
